# EUROPÄISCHE PATENTSCHRIFT

(11) **EP 0 593 852 B1**
(45) Veröffentlichungstag und Bekanntmachung des Hinweises auf die Patenterteilung: **26.04.1995**
(21) Anmeldenummer: 93110877.3
(22) Anmeldetag: 07.07.1993
(51) Int. Cl.: F16L 33/08

(54) **Halteteil für eine Schlauchschelle**
Hose clamp holder
Pièce de fixation pour un collier de serrage

(30) Priorität: 20.10.1992 DE 4235325
(43) Veröffentlichungstag der Anmeldung: 27.04.1994
(73) Patentinhaber: Bayerische Motoren Werke Aktiengesellschaft, 80788 München (DE)
(72) Erfinder: Gambel, Johann, D-82024 Taufkirchen (DE); Schramm, Horst, D-85757 Karlsfeld (DE)

(56) Entgegenhaltungen:
- EP-A- 0 375 482
- DE-A- 2 721 090
- DE-C- 3 524 074
- FR-A- 2 630 808
- GB-A- 2 216 614
- US-A- 4 592 575

## Beschreibung

Die Erfindung bezieht sich auf ein Halteteil für eine Schlauchschelle nach dem Oberbegriff des Anspruchs 1.

Halteteile für Schlauchschellen werden verwendet, um die Position einer Schlauchschelle auf einem Schlauch bereits vor der Montage des Schlauches auf einem Rohrstutzen festzulegen und während der Montage einzuhalten. Derart konfektionierte, d. h. mit Halteteil und Schlauchschelle versehene Schläuche werden direkt auf den betreffenden Rohrstutzen aufgesteckt und durch Anziehen der Schraubschelle befestigt. Die fest vorgegebene Position der Schlauchschelle ermöglicht den Einsatz von automatisierten Werkzeugen (z. B. Robotern) für den Verschraubungsvorgang. Ebenso ist es möglich, bei beengten Platzverhältnissen, die das Fixieren einer Schlauchschelle von Hand nicht zulassen, die durch ein gattungsgemäßes Halteteil in ihrer Lage festgelegte Schraubschelle mit einer Hand festzuschrauben.

Aus der FR 2 630 808 A1 ist ein Halteteil bekannt, das aus einem offenen Ring mit axial abstehenden Armen besteht. Die entspannte Schlauchschelle wird in innenseitige Aussparungen dieser radial federnden Arme eingesetzt. Der Abstand der Arme ist so bemessen, daß der Spannverschluß der Schlauchschelle zwischen zwei Armen aufgenommen wird. Da der Innendurchmesser der Arme im entspannten Zustand kleiner ist als der Außendurchmesser des Schlauches, müssen die Arme zum Aufschieben nach außen gebogen werden. Der die Arme verbindende Ring bildet einen Anschlag für das Halteteil an der Stirnseite des Schlauchendes. Nach dem Aufschieben halten die unter Vorspannung stenenden Arme das Halteteil auf dem Schlauch.

Bei dem bekannten Halteteil ist die Fixierung auf dem Schlauch jedoch unzureichend. Die durch die Aussparungen für das Schellenband verringerte Innenfläche der Arme reicht nicht aus, um bei gleichzeitig gewährleisteter Aufschiebbarkeit des Halteteils auf den Schlauch eine entsprechende Sicherheit gegen Verdrehung und Abziehen vom Schlauch zu garantieren.
Werden konfektionierte Schläuche als "Schüttgut" beispielsweise an das Montageband eines Kfz-Herstellers angeliefert, so kann es bereits während des Transports oder der Entnahme aus dem Transportbehälter zu einer Veränderung der Position der Schlauchschelle kommen. Spätestens bei Aufbringen einer Kraft auf den Spannverschluß der Schlauchschelle verdreht sich das Halteteil und damit auch die Schlauchschelle gegenüber dem Schlauch. Somit ist das bekannte Halteteil zwar zur Anbringung, jedoch nicht zur lagerichtigen Positionierung einer Schlauchschelle auf einem Schlauch geeignet.
Die praktsiche Handhabung des bekannten Halteteils ist unter Umständen problematisch, da die Arme (drei oder mehr) zum Aufschieben auf den Schlauch nach außen gebogen werden müssen. Während des Aufschiebens ist die Gleit- bzw. Haftreibungskraft zu überwinden.

Der Erfindung liegt daher die Aufgabe zugrunde, ein Halteteil für eine Schlauchschelle derart auszubilden, daß das Aufbringen des Kalteteils auf den Schlauch in einfacher Weise erfolgen kann und das Halteteil sicher auf dem Schlauch fixiert ist.

Diese Aufgabe wird durch die kennzeichnenden Merkmale des Anspruchs 1 gelöst.
Kerngedanke der Erfindung ist es dabei, ein den Schlauch umschlingendes Halteteil in Form eines aufweitbaren Ringes zu verwenden, der zum Aufschieben unter Überwindung seiner Eigenelastizität aufgeweitet wird. Bewegungshindernde Gleit- oder Haftreibungseffekte treten während des Aufschiebens nicht auf. Nach erfolgter Positionierung des Halteteils auf dem Schlauch wird die Aufspreizung beendet, wodurch sich das Halteteil aufgrund seiner Vorspannung selbst auf dem Schlauch fixiert. Durch die Umschlingung und die entsprechend große Auflagefläche auf dem Schlauch wird eine sichere Fixierung gegen axiale Verschiebung sowie Verdrehung in Umfangsrichtung erreicht. Bei entsprechender Geometrie des Halteteils zieht sich das Halteteil durch Druck auf das Schellenschloß, beispielsweise bei Einsatz eines Schraubendrehers auf den Spannverschluß einer Schneckengewindeschraubschelle, selbsttätig um den Schlauch zusammen. Hiermit wird gewährleistet, daß sich das Halteteil und damit die Schlauchschelle während der Montage unter der Krafteinwirkung z. B. eines Verschraubungswerkzeuges nicht verdrehen.
Aufgrund der einfachen Handhabung eignet sich das erfindungsgemäße Halteteil zur kostengünstigen serienmäßigen Herstellung von konfektionierten Schläuchen ebenso wie für den mobilen Einsatz oder Einzelfallanwendungen. Spezielle Vorkenntnisse beim Anwender sind nicht erforderlich. Bei entsprechender Gestaltung des Halterings ist ein Abnehmen desselben nach erfolgtem Festziehen der Schraubschelle möglich, so daß das Halteteil wiederverwendet werden kann. Durch die Möglichkeit des Aufweitens des als offenen Ringes ausgebildeten Halteteils ist eine exakte Abstimmung auf den Schlauchdurchmesser nicht erforderlich. Innerhalb bestimmter Grenzen für den Schlauchdurchmesser kann daher das erfindungsgemäße Halteteil universell verwendet werden.

Zwar zeigt auch die FR 2 630 808 A1 einen offenen Ring, der die einzelnen Arme miteinander verbindet und als Anschlag in Aufschieberichtung dient. Dieser Ring wird jedoch nicht auf den Schlauch aufgeschoben und dient damit eindeutig nicht der Fixierung des Halteteils auf dem Schlauch. Der geschlitzte Ring soll lediglich die Durchführung des Rohrstutzens erleichtern.

Aus der US 4 592 575 A sowie der DE-OS 27 21 090 sind halteteilähnliche Vorrichtungen bekannt. In beiden Fällen handelt es sich jedoch nicht um Halteteile, sondern um Schutzkappen.
So beschreibt die US-PS eine schützende und dekorative Kappe, die ein Auffasern des Schlauchendes verhindern soll. In einem ersten Arbeitsgang wird die Schelle lose auf den Schlauch aufgesteckt. Anschließend wird die Kappe auf das Schlauchende aufgesetzt, wobei sie sich durch eine ringförmige, scharfkantige Schulter mit schräger Flanke in axialer Richtung selbst fixiert. Nun wird die Schlauchschelle in die Kappe eingeführt, wobei eine Fixierung in Umfangsrichtung nur in begrenztem Maße gegeben ist, da die Kappe durchrutschen kann.

Die DE-OS betrifft ein Endstück zum Schutz eines Leitungsendes gegen Abrieb, Auffasern und Abnutzung. Insbesondere sollen scharfe Kanten, wie sie bei mit Metallgeweben bewehrten Hochdruckleitungen entstehen, abgedeckt werden, um Verletzungen beim Benutzer zu verhindern. Eine Fixierung des Endstückes auf dem Leitungsende ist nicht vorgesehen; vielmehr wird das Endstück mit übermaß auf das Leitungsende aufgeschoben und anschließend über die Schlauchschelle fixiert.

Durch die vorteilhafte Ausgestaltung der Erfindung gemäß Anspruch 2 ist es in einfacher Weise möglich, den offenen Ring des Halteteils mit den Fingern aufzuspreizen, um ihn anschließend auf das Schlauchende aufzuschieben. Hierzu sind die Bedienflächen körpergerecht zu gestalten. Alternativ können die Bedienflachen so geformt sein, daß sie für den Eingriff eines automatischen Werkzeugs (z. B. Roboter) geeignet sind.

Die Weiterbildung der Erfindung gemäß Anspruch 3 unterstützt die aus der Vorspannung des Halteteils resultierende Fixierung auf dem Schlauchende.
So kann beispielsweise die Innenseite des Halteteils mit einer auf das Schlauchmaterial abgestimmten haftenden Beschichtung oder einer gezielt aufgebrachten Oberflächenrauheit ähnlich der Oberfläche eines Schleifpapiers versehen sein. Ferner ist es möglich, mehr oder weniger scharfkantige noppenartige Erhebungen vorzusehen, die regelmäßig oder unregelmäßig auf der Innenseite des Halteteils angeordnet sind und sich punktuell in das Schlauchmaterial eingraben. Des weiteren kann die Innenseite des Halteteils geriffelt oder mit einer Verzahnung ausgestattet sein. Besonders vorteilhaft ist es, die Verzahnung asymmetrisch auszuführen, wie an sich aus der US 4 191 334 A bekannt. Hierdurch wird ein sperrklinkenartiges Verhaken in Druckrichtung des Schraubwerkzeuges erreicht unter Beibehaltung der Verdrehbarkeit in entgegengesetzter Richtung zur Positionierung des Halteteils. Zur Fixierung des Halteteils auch in Axialrichtung kann die Verzahnung beispielsweise als Pfeilverzahnung ausgeführt sein.

Die Ausgestaltung der Erfindung gemäß Anspruch 4 schafft einen Anschlag am Halteteil, der beim Aufschieben auf das Schlauchende wirksam wird. Hiermit kann in Axialrichtung die optimale Position der Schlauchschelle auf dem Schlauch bzw. bezüglich des zugehörigen Rohrstutzens festgelegt werden.

Ein bevorzugtes Ausführungsbeispiel der Erfindung wird anhand von Zeichnungen nachfolgend näher erläutert. Es zeigt:
- Figur 1: ein erfindungsgemäßes Halteteil mit einer eingesetzten Schlauchschelle in der Seitenansicht,
- Figur 2: eine perspektivische Darstellung des Halteteils von Figur 1 und
- Figur 3: eine der Figur 2 entsprechende Darstellung mit eingesetzter Schlauchschelle.

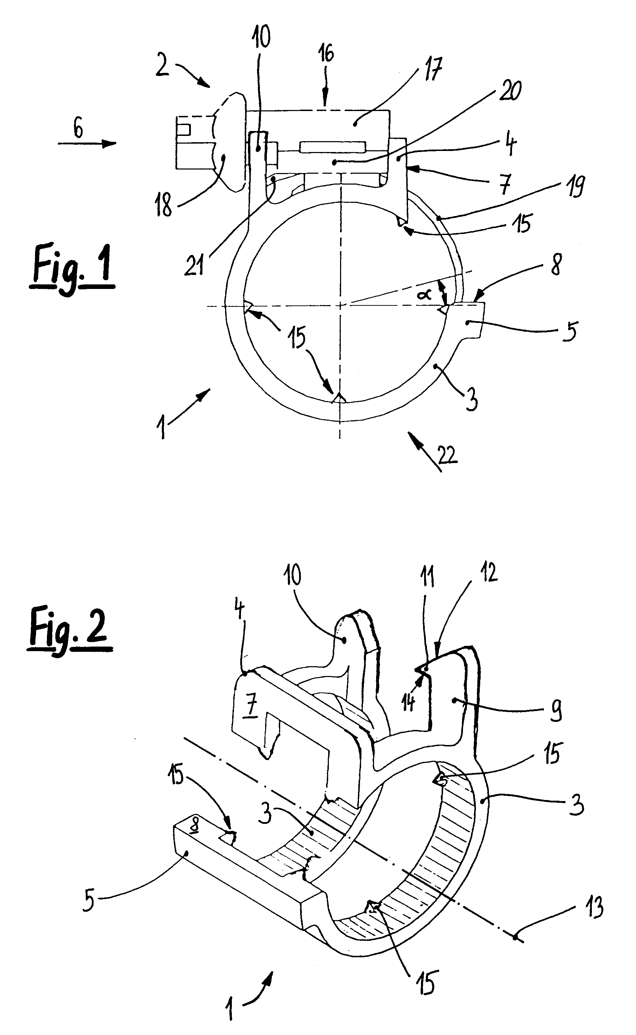

Die Figuren 1 bis 3 zeigen ein erfindungsgemäßes Halteteil 1, teilweise mit eingesetzter Schlauchschelle 2.

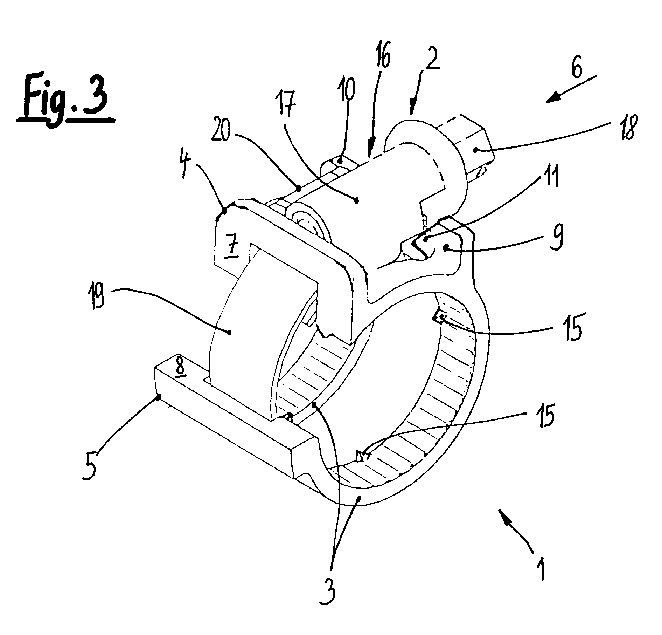

Das Halteteil 1 besteht im wesentlichen aus zwei offenen Ringen 3, deren Endabschnitte paarweise in Axialrichtung durch Stege 4 und 5 miteinander verbunden sind. Der erste Steg 4 bildet - wie aus Figur 1 und 3 hervorgeht - in Druckrichtung 6 eines nicht dargestellten Schraubwerkzeuges einen Anschlag für die Schlauchschelle 2. Erster und zweiter Steg 4 bzw. 5 sind in radialer Richtung nach außen verlängert und weisen dadurch Bedienflächen 7 und 8 auf. Benachbart zum ersten Steg 4 und parallel zu diesem ist an jedem der Ringe 3 eine Haltenase 9 bzw. 10 angeordnet (siehe Figuren 2 und 3). Die erste Haltenase 9 besitzt einen der Schlauchschelle 2 zugewandten Vorsprung 11, mit einer abgeschrägten Oberseite 12 und einer parallel zur Längsachse 13 des Halteteils 1 verlaufenden Unterseite 14. Beide Ringe 3 tragen jeweils an ihrer Innenseite annähernd gleichmäßig verteilte, pyramidenförmige, scharfkantige Erhebungen 15.

Bei der Schlauchschelle 2 handelt es sich beispielsweise um eine Schneckengewindeschelle mit einem Spannverschluß 16, der aus einem Gehäuseblech 17 und einer Spannschraube 18 besteht sowie einem Schellenband 19. Das Gehäuseblech 17 der handelsüblichen Schlauchschelle 2 umgreift die Spannschraube 18 und das Schellenband 19 und ist, wie aus den Figuren 1 und 3 ersichtlich, seitlich in einer Klammer 20 formschlüssig zusammengeführt. Durch Verdrehen der Spannschraube 18 wird der Durchmesser des durch das Schellenband 19 gebildeten Umschlingungsteils verändert, indem das freie Bandende 21 bezüglich des Spannverschlusses 16 verschoben wird.

Die Schlauchschelle 2 wird in das Halteteil 1 eingesetzt, indem die Schlauchschelle 2 in Pfeilrichtung 22 mit der Spannschraube 18 voraus zwischen den beiden Ringen 3 so eingeführt wird, daß die Klammer 20 zwischen dem ersten Steg 4 und den beiden Haltenasen 9 und 10 zu liegen kommt. Der Kopf der Spannschraube 18 ist hierbei der offenen Seite der Ringe 3 abgewandt. Hat die Schlauchschelle 2 die in Figur 3 gezeichnete Position eingenommen, so rastet der Vorsprung 11 oberhalb des freien Bandendes 21 ein und hält die Schlauchschelle 2 in ihrer Lage. Die derart vormontierte Einheit aus Halteteil 1 und Schlauchschelle 2 ist hierbei so sicher zusammengefügt, daß Transportfähigkeit als Schüttgut besteht.

Zum Aufschieben der vormontierten Einheit aus Halteteil 1 und Schlauchschelle 2 (wie in Figur 3 dargestellt) werden die beiden Stege 4 und 5 über die Bedienflächen 7 und 8 von Hand oder durch ein automatische Vorrichtung auseinandergedrückt, wodurch sich die Ringe 3 des Halteteils 1 aufweiten und auf den Schlauch aufschieben lassen. Der Aufweitungswinkel α ist in Figur 1 dargestellt. Nach dem Aufschieben und Positionieren des Halteteils 1 auf dem Schlauch und der Rücknahme der Aufspreizkraft ist das Halteteil 1 auf dem Schlauch fixiert und kann z. B. zusammen mit dem Schlauch als vormontierte Baueinheit weiter montiert werden. Die pyramidenförmigen Erhebungen 15 graben sich in das Schlauchmaterial ein und gewährleisten die Einhaltung der vorgewählten Position der Schlauchschelle 1 in Umfangs- und Axialrichtung. Wird über ein Schraubwerkzeug Druck auf den Spannverschluß 16 ausgeübt, so bewirkt die Kraft in Druckrichtung 6, daß sich das Halteteil 1 zusätzlich um den Schlauch zusammenzieht, so daß eine Verdrehung der Schlauchschelle durch die Krafteinwirkung bei der Montage nicht mehr stattfinden kann.

Nach erfolgtem Festziehen der Schlauchschelle 2 kann - soweit erwünscht und aufgrund der Platzverhältnisse möglich - das Halteteil durch stärkeres Aufspreizen der offenen Ringe 3 vom Schlauch abgenommen und wiederverwendet werden.

Neben Schneckengewindeschellen lassen sich auch andere Arten von Schlauchschellen mit erfindungsgemäßen Halteteilen 1 lagefest vormontieren. Voraussetzung ist jedoch, daß die Schlauchschelle 2 soweit gelöst ist, daß das Halteteil 1 im erforderlichen Maße aufgeweitet werden kann. Auch ist bezüglich der Abstimmung zwischen Außendurchmesser des Schlauches und Innendurchmesser des Halteteils 1 darauf zu achten, daß das Halteteil 1 im montierten Zustand keine zu große Vorspannung auf den Schlauch ausübt, da ansonsten aufgrund der Zusammendrückung des Schlauches und des daraus resultierenden ovalen Schlauchquerschnitts die Montage auf den Rohrstutzen erschwert wird.

Vorteilhafterweise sind die Ringe 3 und damit das gesamte Halteteil 1 so breit auszuführen, daß die Schlauchschelle 2 bezüglich des Rohrstutzens, auf den der Schlauch aufgesteckt wird, in axialer Lage dann automatisch die richtige Position einnimmt, wenn das Halteteil 1 bündig mit dem Schlauchende abschließt. Alternativ kann an der schlauchschellenabgewandten Stirnseite eines der beiden Ringe 3 ein nach innen gerichteter Anschlag vorgesehen sein. Dies verhindert jedoch die beidseitige Verwendbarkeit des Halteteils 1 und erfordert eine Verlängerung des Rohrstutzens um die Anschlagbreite.

Das erfindungsgemäße Halteteil 1 ist einfach zu montieren, gewährleistet einen sicheren Halt auf dem Schlauch, auch und insbesondere gerade unter Krafteinwirkung auf das Schellenschloß (Festspanneffekt), ist kostengünstig herzustellen und universell einzusetzen und zeichnet sich durch geringes Eigengewicht und äußerst geringen Bauraumbedarf aus, was insbesondere bei beengten Platzverhältnissen eine große Bedeutung hat.

## Patentansprüche

1. Schlauchschelle mit einem Halteteil, wobei das Halteteil ringförmig ausgebildet ist und aus elastischem Material besteht,
- die Schlauchschelle verdrehfest und gegen axiale Verschiebung gesichert aufnimmt,
- zusammen mit der Schlauchschelle auf einen Schlauch aufgeschoben und dort fixiert wird,
- zumindest einen offenen Ring aufweist, dessen Innendurchmesser im entspannten Zustand kleiner ist als der Außendurchmesser des Schlauches,
dadurch gekennzeichnet, daß
- das Halteteil (1) aus zwei nebeneinander angeordneten, koaxialen offenen Ringen (3) besteht, deren Enden paarweise in Axialrichtung durch Stege (4, 5) miteinander verbunden sind,
- die Schlauchschelle (2) zwischen die offenen Ringe (3) eingesetzt ist,
- zur Positionierung des Halteteils (1) auf dem Schlauch die beiden offenen Ringe (3) aufgeweitet und auf den Schlauch aufgeschoben werden,
- das Halteteil (1) nach Beendigung der Aufweitung durch die Vorspannung der beiden offenen Ringe (3) auf dem Schlauch fixiert ist.

2. Schlauchschelle mit einem Halteteil nach Anspruch 1,
dadurch gekennzeichnet, daß
die Endabschnitte der offenen Ringe (3) des Halteteils (1) flanschartige Bedienflächen (7, 8) aufweisen, die sich radial nach außen erstrecken und in der Umfangsrichtung voneinander derart beabstandet sind, daß sie von Hand oder durch eine automatische Vorrichtung auseinandergedrückt werden können.

3. Schlauchschelle mit einem Halteteil nach Anspruch 1 und/oder Anspruch 2,
dadurch gekennzeichnet, daß
die offenen Ringe (3) auf ihren Innenseiten bezüglich des Schlauches rutschfest beschaffen oder gestaltet sind.

4. Schlauchschelle mit einem Halteteil nach mindestens einem der vorangegangenen Ansprüche,
dadurch gekennzeichnet, daß
einer der offenen Ringe (3) stirnseitig einen radial nach innen gerichteten Anschlag aufweist.

## Claims

1. A hose clamp comprising a holder, wherein the holder is annular and is made of resilient material,
- and secures the clamp against rotation and against axial displacement,
- and is slid together with the clamp over a hose to which it is secured, and
- comprises at least one open ring the inner diameter of which, in the tension-free state, is less than the outer diameter of the hose,
characterised in that
- the holder (1) comprises two adjacent coaxial open rings (3), the ends of which are connected in pairs by webs (4, 5) in the axial direction,
- the clamp (2) is inserted between the open rings (3),
- for the purpose of positioning the clamp (1) on the hose, the two open rings (3) are expanded and slid on the hose, and
- at the end of the expansion step, the holder (1) is fixed on the hose by the prestress of the two open rings (3).

2. A hose clamp comprising a holder according to claim 1, characterised in that the end portions of the open rings (3) of the holder (1) have flange-like operating surfaces (7, 8) which extend radially outwards and are spaced apart in the peripheral direction so that they can be pushed apart by hand or by an automatic device.

3. A hose clamp comprising a holder according to claim 1 and/or claim 2, characterised in that the inner sides of the open rings (3) are designed or made of a material which prevents slipping relatively to the hose.

4. A hose clamp comprising a holder according to at least one of the preceding claims, characterised in that one of the open rings (3) has a radially-inward abutment on its end face.

## Revendications

1. Collier de serrage avec une pièce de fixation, dans le cas duquel :
- la pièce de fixation est constituée sous une forme annulaire et est en matériau élastique,
- reçoit le collier de serrage sans qu'il puisse tourner et en le bloquant vis-à-vis de toute translation axiale,
- est enfilée en même temps que le collier de serrage sur un tuyau et est fixée à cet endroit,
- présente au moins une bague ouverte dont le diamètre interne, quand elle est desserrée, est plus petit que le diamètre externe du tuyau,
collier de serrage caractérisé en ce que :
- la pièce de fixation (1) consiste en deux bagues ouvertes disposées côte à côte, coaxiales (3), dont les extrémités sont reliées l'une à l'autre par paire dans le sens axial par des entretoises (4, 5),
- le collier de serrage (2) est inséré entre les bagues ouvertes (3),
- on élargit les deux bagues ouvertes (3) pour mettre en place la pièce de fixation (1) sur le tuyau et on les enfile sur celui-ci,
- la pièce de fixation (1) est fixée sur le tuyau, quand on a fini d'effectuer l'écartement, grâce à la précontrainte des deux bagues ouvertes (3).

2. Collier de serrage avec une pièce de fixation selon la revendication 1, caractérisé en ce que les sections terminales des bagues ouvertes (3) de la pièce de fixation (1) présentent des surfaces de maniement en forme de brides (7, 8) qui s'étendent radialement vers l'extérieur et sont à une distance l'une de l'autre, dans le sens périphérique, telle qu'elles peuvent être écartées l'une de l'autre à la main ou au moyen d'un dispositif automatique.

3. Collier de serrage avec une pièce de fixation selon la revendication 1 et/ou la revendication 2, caractérisé en ce que les bagues ouvertes (3) sont réalisées ou conformées de façon à ne pas pouvoir glisser sur leurs faces internes par rapport au tuyau.

4. Collier de serrage avec une pièce de fixation selon au moins l'une des revendications précédentes, caractérisé en ce que l'une des bagues ouvertes (3) présente du côté frontal une butée radiale orientée vers l'intérieur.
